# EUROPEAN PATENT APPLICATION

(11) **EP 3 949 801 A1**
(43) Date of publication of application: **09.02.2022**
(21) Application number: 20784721.1
(22) Date of filing: 27.01.2020
(51) Int. Cl.: A45D 44/22, B32B 5/18, A61Q 19/00, A45D 97/00, A61K 8/02

(54) **COSMETIC SET**

(30) Priority: 29.03.2019 JP 2019067567; 18.10.2019 JP 2019190874
(71) Applicant: Panasonic Intellectual Property Management Co., Ltd., Osaka-shi, Osaka 540-6207 (JP)
(72) Inventor: UEDA, Mari, Osaka-shi (JP); SHINODA, Masayo, Osaka-shi (JP); MINAMOTO, Takafumi, Osaka-shi (JP); NAKANISHI, Tadatoshi, Osaka-shi (JP); HATTORI, Emi, Osaka-shi (JP); KAJIMA, Takao, Osaka-shi (JP); KANEMARU, Hiroshi, Osaka-shi (JP); YAMAGUCHI, Mao, Osaka-shi (JP)
(74) Representative: Grünecker Patent- und Rechtsanwälte PartG mbB
(86) International application number: PCT/JP2020/002757
(87) International publication number: WO 2020/202740

(57) **Abstract**

Provided is a cosmetic set with which a support can be easily released from a thin film sheet, and the thin film sheet wrinkles less when attached. A cosmetic set (100) includes a multilayer sheet (12) that includes a support (12a) and a thin film sheet (12b) disposed on the support; a hydrophilic substrate (13); a water-based liquid; and a porous substrate (11) that can retain the water-based liquid inside. Under a state in which the porous substrate is impregnated with the water-based liquid, the multilayer sheet is placed so that the support faces the porous substrate, the hydrophilic substrate is further placed on the multilayer sheet, and the porous substrate, the multilayer sheet, and the hydrophilic substrate are pressed so as to impregnate the multilayer sheet with the water-based liquid and release the thin film sheet and the support.

## Description

### Technical Field

The present disclosure relates to a cosmetic set.

### Background Art

There have been proposals of making spots, bruises, and scars (hereinafter these may be referred to as "discolored regions") etc., on the skin less conspicuous by applying an ink containing various coloring materials to a thin film and attaching the resulting thin film to the human body (for example, PTL 1). According to the technology in PTL 1, an image of the skin is captured, and a discolored region is identified. Then a color similar to the color around the discolored region is printed to a thin film sheet, and the thin film sheet is attached to make the discolored region less conspicuous.

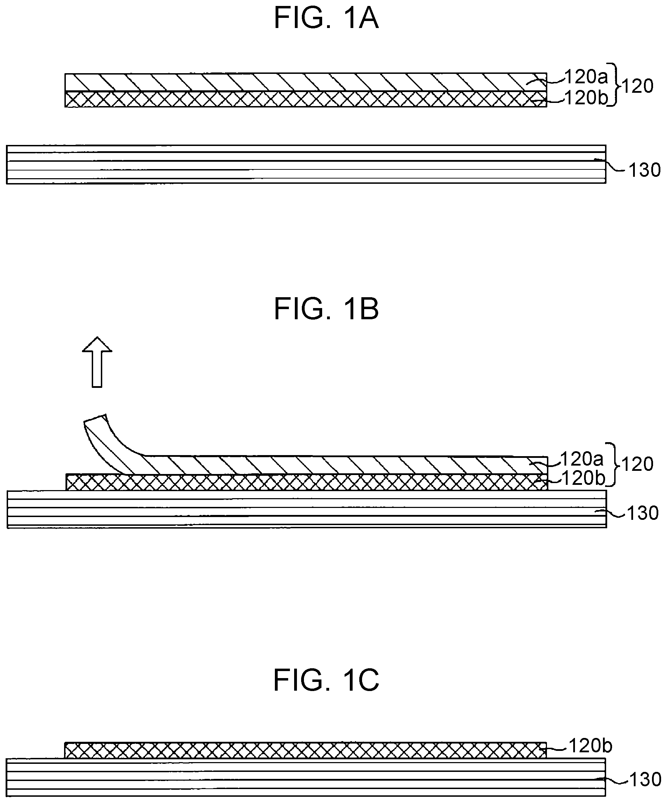

Such a thin film sheet is usually stacked with a support and distributed, and the user releases the thin film sheet from the support and attaches the thin film sheet to the skin. However, since the thin film sheet is extremely thin, it is difficult to attach the thin film sheet to the skin without causing wrinkles and the like. Thus, PTL 2 proposes a method for attaching a thin film sheet to skin using a jig. For example, as illustrated in Figs. 1A to 1C, a multilayer sheet 120 including a support 120a and a thin film sheet 120b stacked on top of each other is placed on a jig 130 with the thin film sheet 120b facing the jig 130 (Fig. 1A). Next, the support 120a is sprayed with water to form a water layer (not illustrated) between the support 120a and the thin film sheet 120b. Subsequently, the support 120a is lifted up in the direction indicated by the arrow in Fig. 1B to release the support 120a from the thin film sheet 120b (Figs. 1B and 1C). Next, the thin film sheet 120b is closely adhered to an adherend surface (skin or the like) and attached (not illustrated).

### Citation List

### Patent Literature

PTL 1: Japanese Unexamined Patent Application Publication No. 2015-43836
PTL 2: International Publication No. 2018/061486

### Summary of Invention

By using a jig 130 as in the method of PTL 2, it becomes easy to attach a thin film sheet 120b to an adherend surface (skin or the like). However, since the thin film sheet 120b is very thin, it is difficult to release the support 120a and the thin film sheet 120b. For example, when the support 120a is being released, the thin film sheet 120b comes to be lifted together with the support 120a, and this may result in detachment from the jig 130 and wrinkling in the thin film sheet 120b. In addition, when the thin film sheet 120b becomes wrinkled on the jig 130, wrinkling tends to occur when the thin film sheet 120b is attached to the skin.

Thus, the present disclosure provides a cosmetic set with which a support can be easily released from a thin film sheet, and the thin film sheet wrinkles less when attached.

A cosmetic set of the present disclosure includes a multilayer sheet that includes a support and a thin film sheet disposed on the support; a hydrophilic substrate; a water-based liquid; and a porous substrate that can retain the water-based liquid inside. Under a state in which the porous substrate is impregnated with the water-based liquid, the multilayer sheet is placed so that the support faces the porous substrate, the hydrophilic substrate is further placed on the multilayer sheet, and the porous substrate, the multilayer sheet, and the hydrophilic substrate are pressed so as to impregnate the multilayer sheet with the water-based liquid and release the thin film sheet and the support.

According to the cosmetic set of the present disclosure, the support can be released from the thin film sheet by simple operation, and the thin film sheet can be attached to an adherend surface without wrinkling.

### Brief Description of Drawings

[Fig. 1A] Fig. 1A is a schematic cross-sectional view illustrating a method for releasing a support from a multilayer sheet by using a known jig.
[Fig. 1B] Fig. 1B is a schematic cross-sectional view illustrating a method for releasing a support from a multilayer sheet by using a known jig.
[Fig. 1C] Fig. 1C is a schematic cross-sectional view illustrating a method for releasing a support from a multilayer sheet by using a known jig.
[Fig. 2] Fig. 2 is a perspective view illustrating a cosmetic set according to one embodiment of the present disclosure.
[Fig. 3A] Fig. 3A is a schematic cross-sectional view illustrating a method for releasing a support from a multilayer sheet of a cosmetic set of the present disclosure.
[Fig. 3B] Fig. 3B is a schematic cross-sectional view illustrating a method for releasing a support from a multilayer sheet of the cosmetic set of the present disclosure.
[Fig. 3C] Fig. 3C is a schematic cross-sectional view illustrating a method for releasing a support from a multilayer sheet of the cosmetic set of the present disclosure.
[Fig. 4] Fig. 4 is a perspective view of a casing included in the cosmetic set according to one embodiment of the present disclosure.
[Fig. 5] Fig. 5 is a perspective view illustrating another casing included in the cosmetic set according to one embodiment of the present disclosure.

### Description of Embodiments

A cosmetic set of the present disclosure includes a porous substrate, a multilayer sheet, a water-based liquid, and a hydrophilic substrate, and these may be contained in separate casings, containers, bags, etc. However, in the description below, an embodiment in which the porous substrate, the multilayer sheet, the water-based liquid, and the water-based liquid are housed in one casing is described as an example.

As mentioned above, it is difficult to release a support from a multilayer sheet constituted by a thin film sheet and a support stacked on top of each other. Thus, heretofore, the support has been released by placing the multilayer sheet on a jig and spraying the multilayer sheet with water to form a water layer between the support and the thin film sheet. However, according to this method, it is difficult to evenly apply water to the entire multilayer sheet. In addition, sufficient release cannot be achieved in a region with less water, and both the support and thin film sheet become lifted, possibly resulting in wrinkles and the like in the thin film sheet. Furthermore, according to existing methods, air may enter the gap between the thin film sheet and the jig, and the thin film sheet is likely to wrinkle due to this air also.

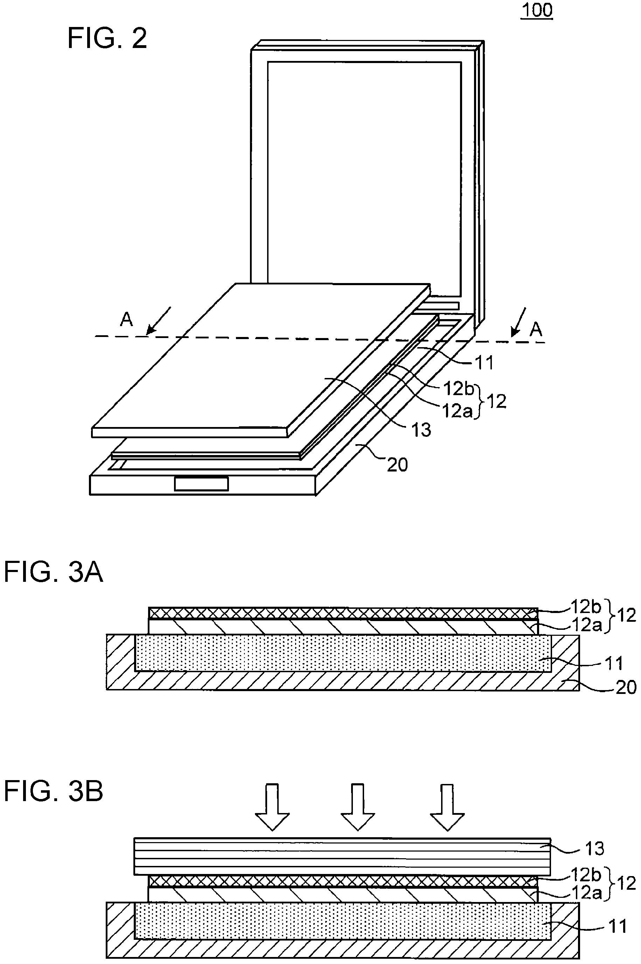

In contrast, with the cosmetic set of this embodiment, the support can be easily released from the multilayer sheet without complicated operation, and the thin film sheet can be attached to an adherend surface without wrinkling. Fig. 2 illustrates a structure of a cosmetic set 100 according to this embodiment when in use. Figs. 3A to 3C illustrate the procedure of releasing a support 12a by using the cosmetic set 100. Figs. 3A to 3C are schematic cross-sectional views taken at line A-A in Fig. 2.

According to the cosmetic set 100 of this embodiment, a porous substrate 11 that retains a water-based liquid (not illustrated) inside is prepared, and a multilayer sheet 12 is placed on the porous substrate 11 (Fig. 3A). Here, the multilayer sheet 12 is placed so that the support 12a faces the porous substrate 11. In addition, the porous substrate 11 may be preliminarily impregnated with the water-based liquid, or the water-based liquid may be supplied to the porous substrate 11 before placement of the multilayer sheet 12 to impregnate the porous substrate 11 with the water-based liquid.

Next, a hydrophilic substrate 13 is further placed on the thin film sheet 12b of the multilayer sheet 12. Then the hydrophilic substrate 13, the multilayer sheet 12, and the porous substrate 11 are pressed (Fig. 3B). At this stage, as illustrated in Fig. 3B, the hydrophilic substrate 13 may be pressed toward the porous substrate 11 (the arrow direction in Fig. 3B) or the porous substrate 11 may be pressed toward the hydrophilic substrate 13. Alternatively, pressure may be applied in both directions. When the hydrophilic substrate 13, the multilayer sheet 12, and the porous substrate 11 are pressed, the water-based liquid is discharged from the porous substrate 11 and supplied toward the multilayer sheet 12 and the hydrophilic substrate 13. As a result, a layer of the water-based liquid is formed between the support 12a and the thin film sheet 12b, thereby facilitating the release. Meanwhile, a layer of the water-based liquid is also evenly formed between the hydrophilic substrate 13 and the thin film sheet 12b. At this interface, the thin film sheet 12b adsorbs onto the hydrophilic substrate 13 side due to high hydrophilicity of the hydrophilic substrate 13.

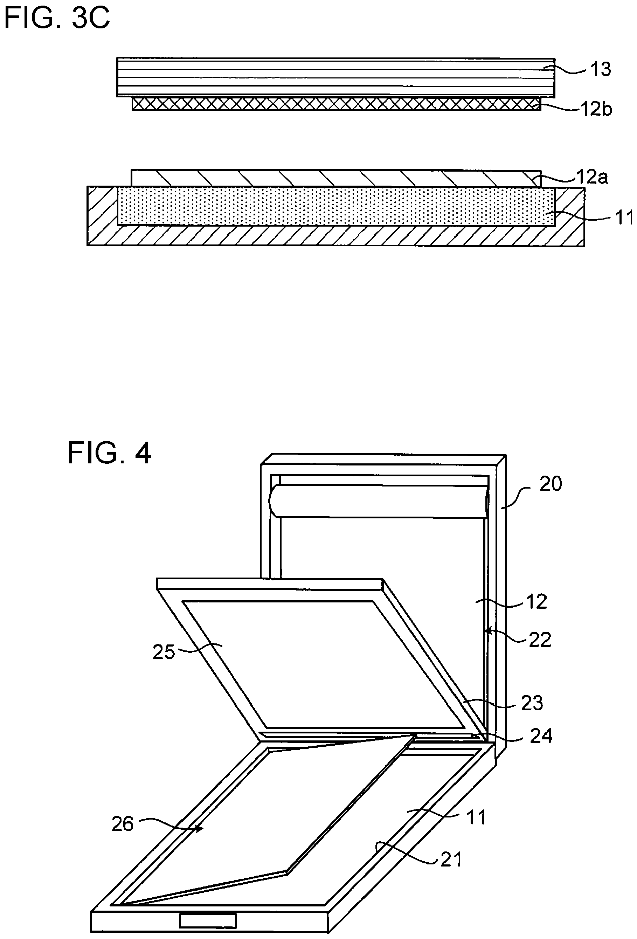

When the hydrophilic substrate 13 is lifted, the support 12a is readily released from the thin film sheet 12b, and thus the hydrophilic substrate 13 and the thin film sheet 12b are lifted (Fig. 3C). Subsequently, the thin film sheet 12b supported by the hydrophilic substrate 13 is caused to closely adhere to the adherend surface (for example, skin) to attach the thin film sheet 12b to the adherend surface.

According to the cosmetic set 100 of this embodiment, since the porous substrate 11 evenly retains the water-based liquid inside, water is evenly supplied to all parts of the multilayer sheet 12 and the hydrophilic substrate 13. Even if large quantities of the water-based liquid is supplied from the porous substrate 11 as a result of the aforementioned pressing, excess water-based liquid is absorbed (retained) in the porous substrate 11 again. Thus, it is always possible to supply an appropriate amount of the water-based liquid to the multilayer sheet 12 side, and the user does not have to determine or adjust the quantity of water. Moreover, since the water-based liquid is not excessively supplied, dripping of the water-based liquid during the process of attaching the thin film sheet 12b to the adherend surface can be suppressed.

Furthermore, according to this cosmetic set 100, even if an air layer is generated between the hydrophilic substrate 13 and the thin film sheet 12b when the hydrophilic substrate 13 and the thin film sheet 12b are stacked, air is pushed out as the hydrophilic substrate 13 and the thin film sheet 12b (multilayer sheet 12) are pressed. Thus, the hydrophilic substrate 13 and the thin film sheet 12b closely attach to each other without any gap, and the thin film sheet 12b rarely wrinkles. As a result, the thin film sheet 12b can be attached to the adherend surface without wrinkling.

Next, individual features of the cosmetic set of the present disclosure are described in details.

### (1) Porous substrate

The porous substrate of this embodiment can retain the water-based liquid mentioned below in the inside and has a large number of pores. The porous substrate may be any substrate that can elastically deform when pressed with the hydrophilic substrate or the multilayer sheet and that can discharge the water-based liquid retained inside the pores. In this embodiment, the porous substrate is retained in a porous substrate housing unit of a casing described below; however, the porous substrate may be used without being retained in the casing.

The amount of the water-based liquid that can be retained in the porous substrate may be any amount sufficient for one use of the cosmetic set; however, preferably, when the weight of the porous substrate is assumed to be 1, the porous substrate preferably retains greater than or equal to 1 of water (water-based liquid) and more preferably retains greater than or equal to 2 of water (water-based liquid). When the porous substrate has such water absorbency, a sufficient amount of the water-based liquid can be supplied to the multilayer sheet or the like, and there is no need to supply the water-based liquid each time the cosmetic set is used.

The porous substrate preferably has a Shore A hardness less than or equal to 90, more preferably less than or equal to 50, and yet more preferably less than or equal to 10. When the Shore A hardness of the porous substrate is less than or equal to 90, the porous substrate easily and appropriately deforms when pressed with the hydrophilic substrate or the multilayer sheet, and can smoothly discharge the water-based liquid retained inside. The Shore A hardness is measured according to Japanese Industrial Standards / Shore hardness test - Test method, JIS Z 2246.

The shape of the porous substrate is appropriately selected according to the shape of the multilayer sheet described below, etc., and may be any shape as long as the porous substrate is larger than the multilayer sheet in plan. The thickness of the porous substrate is also not particularly limited, and is appropriately selected according to the amount of the water-based liquid to be retained inside, the Shore A hardness of the porous substrate, etc.

The pores in the porous substrate may be minute voids (pores); for example, the pores may be spaces formed by arranging fibrous materials into a mesh. The pores may be arranged regularly or at random. Moreover, the size of the pores, the number of pores, and the like are not particularly limited as long as the desired amount of the water-based liquid can be retained and discharged. The porous substrate may be, for example, a sponge, a nonwoven cloth, or a woven cloth.

The material for the porous substrate may be any material that can retain the water-based liquid in the pores, and is preferably a hydrophilic material having a water contact angle less than or equal to 90° or a water-absorbent material that can retain water inside. The porous substrate may be formed of a single layer or may have a stacked structure constituted by multiple layers stacked on top of each other.

Specific examples of the material for the porous substrate include natural materials such as natural rubber, Spongia officinalis, and cotton; synthetic resins such as ethylene·α-olefin copolymer, urethane resins (including ester urethane resins), melamine resins, synthetic rubbers, polyesters, nylons, acryls, and polyvinyl alcohols; and hybrid materials thereof. The porous substrate may contain only one of these or two or more of these.

Among these, materials with higher hydrophilicity are preferable, polyvinyl alcohol and hydrophilic urethane resins are more preferable, and hydrophilic polyurethane resins are particularly preferable from the viewpoints of availability and ease of increasing hydrophilicity by introduction of hydrophilic groups.

The porous substrate may be subjected to antibacterial finishing. For example, the surface of the material constituting the porous substrate may carry an antibacterial component, or an antibacterial component may be kneaded in a synthetic resin. Alternatively, the porous substrate may be sterilized in advance. When the porous substrate is subjected to antibacterial finishing or sterilized, bacterial growth and the like are suppressed even when the water-based liquid is retained over a long period of time, and this contributes to hygiene.

### (2) Multilayer sheet

The multilayer sheet includes a support and a thin film sheet disposed on the support. The multilayer sheet is preferably stored in a low-humidity environment until immediately before the use. In this embodiment, the multilayer sheet is housed in a multilayer sheet housing unit of the casing described below; alternatively, the multilayer sheet may be housed in a container, a bag, or the like that is different from the casing that houses the porous substrate. The casing, container, bag, etc., that house the multilayer sheet may contain a desiccant and the like together with the multilayer sheet as needed.

The multilayer sheet may take the form of a roll or individual sheets. When the multilayer sheet is a roll, a necessary length of the multilayer sheet is pulled out and used. When the multilayer sheet is a roll, cutting lines (incisions) or the like may be formed so that a desired length can be cut off.

### (Thin film sheet)

The thin film sheet is a sheet to be attached to an adherend surface. The usage of the thin film is not particularly limited, and the thin film sheet may be used as a beauty sheet for makeup (including face painting), skin care, sunblock, bruise covering, etc., or may be used as a medical sheet that covers various type of scars.

The thickness of the thin film sheet is to be sufficiently small, for example, less than or equal to 1 mm. The thickness of the thin film is preferably less than or equal to 10 µm, more preferably 10 nm to 10 µm, and yet more preferably 10 nm to 1000 nm from the viewpoint of close adhesion to the skin. When the thickness of the thin film sheet is within this range and the thin film sheet is attached to, for example, the skin, the user does not feel discomfort and the close adhesion can be ensured for a long time.

The thin film sheet may be a sheet constituted by a liquid-permeable thin film and a coloring layer, a light-scattering layer, or the like. When the thin film sheet includes a coloring layer, a light-scattering layer, or the like in addition to a thin film, the adherend surface (for example, the skin) can be colored in a desired color by attaching the thin film sheet. More specifically, it becomes possible to color the skin and make a discolored site of the skin appear normal. When the thin film sheet has a coloring layer or the like, it is preferable to attach the coloring layer-free surface of the thin film sheet to the adherend surface. When the adherend surface is the human skin, a biocompatible thin film is attached to the skin so that less irritation and the like occur on the skin. Thus, when the thin film sheet has a coloring layer, the thin film sheet is stacked on a support such that the thin film is on the support side and the coloring layer is on the hydrophilic substrate side.

The thin film included in the thin film sheet is preferably a biocompatible sheet member that does not cause discomfort even when the thin film is attached to the human skin. The thin film is usually preferably colorless and transparent or semi-transparent.

The thickness of the thin film in the thin film sheet is preferably 10 nm to 10 µm and more preferably 10 nm to 1000 nm. In particular, when the thin film is hydrophobic, the thickness of the thin film is preferably 10 nm to 800 nm.

The shape of the thin film in plan is not particularly limited and is appropriately selected according to the shape of the site where the thin film sheet is to be attached and the usage. Incisions may be formed in the outer peripheral portion and/or within the surface so that the thin film is appropriate for the shape of the site where the thin film sheet is to be attached.

Here, the thin film may be a sheet formed by a spin coating method, a roll-to-roll method, a Langmuir-Blodgett method (LB method), or the like, or may be a fiber sheet or the like in which fibers formed by electrospinning are stacked on top of one another.

Examples of the material for the thin film include polyesters such as polyglycolic acid, polylactic acid, polycaprolactone, polyethylene succinate, polyethylene terephthalate, and copolymers thereof; polyethers such as polyethylene glycol and polypropylene glycol; polyamides such as nylon, polyglutamic acid, polyasparatic acid, and salts thereof; polysaccharides and salts thereof such as pullulan, cellulose, starch, chitin, chitosan, alginic acid, hyaluronic acid, and cornstarch; silicones such as acryl silicone and trimethylsiloxysilicate; acrylic acids such as alkyl acrylate, silicone acrylate, amide acrylate, and copolymers thereof; polyvinyl alcohol; polyurethane; polycarbonate; polyacid anhydrides; polyethylene; polypropylene; porous layer coating sheets; nanofiber sheets; and silk. When the material for the thin film is polylactic acid, cellulose (for example, carboxymethyl cellulose or hydroxyethyl cellulose), starch, chitin, chitosan, alginic acid, cornstarch, or polyurethane among these, the biocompatibility, availability, handling ease, etc., are improved.

Meanwhile, the coloring layer disposed on the thin film contains a coloring material and a binder. The coloring layer may further contain a film-forming agent, a dispersant, various additives, etc. The color of the coloring layer is usually matched with the skin color; however, when the thin film sheet is used as cosmetic products such as blushes, eye shadows, and body paintings, the color may be any desired color. The entire thin film sheet may have the same color; alternatively, a region in a different color may be present in some part. Marks and the like for alignment may also be provided.

The coloring layer may be formed of a single layer or may be constituted by two or more layers. When the coloring layer is constituted by multiple layers, the types of the coloring materials contained in the respective layers may be the same or different. The amounts of the coloring materials contained in the respective layers may be the same or different. For example, a stacked structure in which a coloring layer of a desired color is stacked on a coloring layer having a color that matches the skin color may be employed.

Examples of the coloring material contained in the coloring layer include inorganic red pigments such as iron oxide, iron hydroxide, and iron titanate; inorganic brown pigments such as γ-iron oxide; inorganic yellow pigments such as yellow iron oxide and loess; inorganic black pigments such as black iron oxide and carbon black; inorganic purple pigments such as manganese violet and cobalt violet; inorganic green pigments such as chromium hydroxide, chromium oxide, cobalt oxide, and cobalt titanate; inorganic blue pigments such as navy blue (ferrous ferrocyanide), ultramarine (ultramarine blue), lapis lazuli, blue verditer, aluminum-cobalt oxide, aluminum-zinc-cobalt oxide, silicon-cobalt oxide, silicon-zinc-cobalt oxide, cobalt pigments, smalt, cobalt blue, cobalt stannate, cobalt chromium blue, cobalt-aluminum-silicon oxide, and manganese blue; organic blue pigments or dyes such as indigo, phthalocyanine, indanthrene blue, and sulfonates thereof; and various laked tar colors, various laked natural colors, and synthetic resin powders combining powders thereof.

Meanwhile, the shape of the binder contained in the coloring layer is not particularly limited, but is preferably granular and is particularly preferably (meth)acrylic resin particles (hereinafter may be simply referred to as "acrylic particles"). When the binder is formed of acrylic particles, the fixability of the coloring material described above is readily improved, and the durability of the coloring layer is easily improved. The binder is more preferably formed of a (meth)acrylic resin having no skin irritancy. Thus, the acrylic particles are preferably selected from the components listed in the list of the Japanese Labeling Name of Cosmetic Ingredients based on Pharmaceutical Affairs Act of Japan, components that comply with the EU directive of cosmetic products (Cosmetics Directive 76/768/EEC), components described in International Cosmetic Ingredient Dictionary and Handbook (January 1, 2002, 9th edition) by Cosmetic, Toiletry & Fragrance Association, U.S. (CTFA), and the like, and are preferably acrylic resin particles that are used in known cosmetics and the like.

The amount of the binder in the coloring layer is preferably 0.5 to 10 parts by mass and more preferably 1.5 to 5.7 parts by mass when the amount of the coloring material is assumed to be 10 parts by mass. When the amount of the binder relative to the amount of the coloring material is within the aforementioned range, the fixability of the coloring material is enhanced. When the amount of the binder is within the aforementioned range, the relative amount of the coloring material is likely to be sufficient, and a desired color can be imparted to the coloring layer.

The thickness of the coloring layer is appropriately selected according to the density of the desired color and the like, but is preferably 10 nm to 15 µm and more preferably 10 nm to 3 µm. When the thickness of the coloring layer is within the aforementioned range, a desired color can be easily developed without a sense of thick application. When multiple coloring layers are to be stacked, the total of these thickness values is preferably within the aforementioned range. Such a coloring layer can be formed by applying an ink containing a coloring material and a binder to a thin film by an ink jet printing method, a screen printing method, offset printing, gravure printing, or the like. The ink may be oil-based or water-based. Among these, an ink jet method is preferable since this method is suitable for on-demand printing and from the viewpoint of enabling layer printing with which a cosmetic ink is applied multiple times, etc.

Meanwhile, the light-scattering layer contains a reflective material and a binder. The light-scattering layer may further contain a film-forming agent, a dispersant, various additives, etc. The light-scattering layer may be formed of a single layer or may be constituted by two or more layers. When the light-scattering layer is constituted by multiple layers, the types of the reflective materials contained in the respective layers may be the same or different. The amounts of the reflective materials contained in the respective layers may be the same or different.

The reflective material contained in the light-scattering layer may be any particles that can scatter or reflect ultraviolet light and visible light (for example, light having a wavelength of 200 to 780 nm), and examples thereof include pearl agents, soft focus agents, and glitter agents. The pearl agents, the soft focus agents, and the glitter agents are preferably free of skin irritancy.

The amount of the binder in the light-scattering layer is preferably 0.5 to 10 parts by mass and more preferably 1.5 to 5.7 parts by mass when the amount of the reflective material is assumed to be 10 parts by mass. When the amount of the binder relative to the amount of the reflective material is within the aforementioned range, the fixability of the reflective material is enhanced. When the amount of the binder is within the aforementioned range, the relative amount of the reflective material is likely to be sufficient, and light can be sufficiently reflected and scattered by the light-scattering layer.

The thickness of the light-scattering layer is preferably 10 nm to 120 µm and more preferably 10 nm to 100 µm. When the thickness of the light-scattering layer is within the aforementioned range, light reflected by the skin surface is easily sufficiently reflected by the light-scattering layer.

The thin film sheet may further have a glossy layer, a hygroscopic layer, and the like stacked thereto as long as the purpose and effects of the present embodiment are not impaired. When a hygroscopic layer is disposed, the humidity on the surface side of the thin film sheet is controlled, and comfort is increased. A hygroscopic layer usually contains a hygroscopic agent, and examples of the hygroscopic agent include spherical silica, porous acrylic particles, and nylon 6 (polyamide 6).

### (Support)

The support is a sheet-shaped member to be stacked with the aforementioned thin film sheet, and is a layer for protecting the aforementioned thin film sheet. The shape of the support is not particularly limited as long as one of the surfaces of the thin film sheet can be covered. The shape of the support in plan may be identical to that of the thin film sheet or may be larger than the thin film sheet. For example, the support may have a press margin to be pressed so as to prevent the support from being lifted from the porous substrate during release from the thin film sheet. The support may also have a grip margin to be gripped by a user when the multilayer sheet is moved, or may have a projection or the like that facilitates removal of the support from the porous substrate after the release of the thin film sheet. The support may be formed of a single layer or may be constituted by multiple layers stacked on top of each other.

The thickness of the support is preferably 50 nm to 2000 µm and more preferably 100 nm to 1500 µm. When the thickness of the support is within the aforementioned range, the support exhibits flexibility and the multilayer sheet becomes easy to handle.

The support is preferably composed of a hydrophilic material or a water-absorbent material that can retain water inside. When the support is composed of a hydrophilic or water-absorbent material, the water-based liquid supplied from the porous substrate side can permeate into the thin film sheet side. Moreover, an even layer of the water-based liquid can be formed between the support and the thin film sheet. In this description, a hydrophilic material refers to a material that has a contact angle less than or equal to 90° and a water-absorbent material refers to a material that has a structure (such as pores) that can retain water inside.

Examples of the material for the support include paper (cellulose), rayon, polyester, aramid, glass fibers, nylon, vinylon, polyolefin (for example, polyethylene, low density polyethylene, and polypropylene), ethylene vinyl acetate resins, synthetic rubber, copolymerized polyamide resins, copolymerized polyester resins, porous films, and nano fiber sheets. Among these, paper (cellulose), rayon, and polyester are preferable from the viewpoint of ease of releasing the support from the thin film sheet. In addition, the support may or may not transmit light. In order to distinguish a surface having a thin film sheet stacked thereto and a surface free of the thin film sheet, one of the surfaces may be colored or have characters or patterns thereon.

### (3) Hydrophilic substrate

The hydrophilic substrate is a substrate having at least one surface (the surface facing the thin film sheet of the multilayer sheet) that exhibits hydrophilicity, and the hydrophilic substrate is used as a jig or the like when attaching the thin film sheet to an adherend surface. In this description, the phrase "substrate exhibits hydrophilicity" refers to the state in which the contact angle between the substrate and water is less than or equal to 90°. The contact angle between the hydrophilic substrate and water is preferably less than or equal to 90° and more preferably less than or equal to 50°. When the contact angle between the hydrophilic substrate and water is within the aforementioned range, a layer of the water-based liquid is easily evenly formed on the surface of the hydrophilic substrate, and the thin film sheet easily closely attaches.

The shape of the hydrophilic substrate in plan may be any shape larger than the shape of the aforementioned thin film sheet in plan in this embodiment. The hydrophilic substrate may have a flat plate shape or may have a curved surface (concave surface or convex surface). In addition, the thickness thereof is also not particularly limited, but is preferably about 0.1 to 15 mm and more preferably about 0.1 to 8 mm from the viewpoint of handling ease.

The hydrophilic substrate may be formed of a single layer or may be constituted by two or more layers. For example, the hydrophilic substrate may be a substrate in which a hydrophilic film and a substrate having a desired elasticity are stacked. These may be bonded with an adhesive or the like. When the hydrophilic substrate is a multilayer body including a hydrophilic film and an elastic substrate and when the surface (adherend surface) to which the thin film sheet is to be attached is curved, the hydrophilic substrate can follow the shape of the surface and the thin film sheet can be closely attached to the adherend surface.

The hydrophilic surface (surface facing the thin film sheet) of the hydrophilic substrate may be a smooth, flat surface or may have irregularities. When the hydrophilic substrate has irregularities on the surface, the water-based liquid can be easily retained on the surface and the thin film sheet can be smoothly adsorbed as the porous substrate is pressed with the hydrophilic substrate or the multilayer sheet.

The hydrophilic substrate may or may not be transparent; however, some or all parts of the hydrophilic substrate are preferably transparent from the viewpoint of ease of visually identifying the thin film sheet attachment position in attaching the thin film sheet to the adherend surface.

Examples of the hydrophilic substrate include a sheet that contains rayon, polyester, aramid, glass fibers, nylon, vinylon, polyolefin (polyethylene, polypropylene, low density polyethylene, or the like), an ethylene vinyl acetate resin, synthetic rubber, a copolymerized polyamide resin, or a copolymerized polyester resin, a silicon (Si) sheet that contains a hydrophilic agent, an elastomer sheet containing a hydrophilic agent, and a rubber sheet composed of a water-based gel or the like. These sheets may be subjected to various types of hydrophilizing treatments.

### (4) Water-based liquid

The water-based liquid is used by impregnating the aforementioned porous substrate therewith. In the cosmetic set of this embodiment, the porous substrate is impregnated with the water-based liquid in advance. Alternatively, the water-based liquid may be stored in a hermetically sealable container and may be supplied to the porous substrate as necessary at the time the cosmetic set is used. The container storing the water-based liquid may be any container that is not eroded by the water-based liquid, and can be a known cosmetic bottle or the like.

The water-based liquid may be any liquid that contains water and/or a water-soluble solvent (hereinafter, this is collectively referred to as a "water-based solvent"). Examples of the water-soluble solvent include alcohols that have no skin irritancy. Examples of the alcohols include ethanol and polyhydric alcohols (1,3-butylene glycol, dipropylene glycol, and propylene glycol). However, it is particularly preferable that the water-based liquid contain water.

The amount of the water-based solvent in the water-based liquid is appropriately selected according to the desired viscosity of the water-based liquid, but is preferably less than or equal to 99.5 mass% and more preferably 50 to 99.5 mass%. When the aforementioned range of the water-based solvent is contained, the support and the thin film sheet of the multilayer sheet can be easily released.

Furthermore, the water-based liquid preferably further contains a cosmetic preservative component. The cosmetic preservative component may be any component approved as a cosmetic additive. Examples of the cosmetic preservative component include chlorhexidine hydrochloride, hydrogen peroxide solution, cocoyl arginine ethyl ester·pyrrolidone carboxylate, zinc pyrithione, phenoxyethanol, sodium lauryldiaminoethylglycine, photosensitizers, benzoic acid, pantothenyl ethyl benzoate, iodopropynyl butylcarbamate, polyaminopropyl biguanide, resorcinol, chlorphenexin, ethanol, ethylhexyl glycerin, zinc oxide, plant-derived antibacterial compositions, octanediol, zinc, ammonia, silver composite-substituted zeolite, orthophenylphenol sodium, silver-copper zeolite, 1,3-dimethylol-5,5-dimethylhydantoin, thianthol, piroctone olamine, paradimethylaminostyryl heptyl methyl thiazolium iodide, benzoic acid salts such as sodium benzoate, alkyldiaminoethylglycine hydrochloride, chlorcresol, chlorobutanol, salicylic acid, salicylates such as sodium salicylate, sorbic acid, sorbates such as potassium sorbate, dehydroacetic acid, dehydroacetates such as sodium dehycroacetate, trichlorohydroxydiphenyl ether, paraoxybenzoic acid ester and its sodium salts (paraben), phenol, resorcin, isopropylmethylphenol, cetylpyridinium chloride, benzalkonium chloride, benzethonium chloride, orthophenylphenol, chlorhexidine gluconate, cresol, chloramine T, chlorxylenol, chlorphenesin, chlorhexidine, alkylisoquinolium bromide, thymol, trichlorocarbanilide, parachlorphenol, halocarban, hinokithiol, pyrithione zinc, methylchloroisothiazolinone·methylisothiazolinone solution, N,N"-methylenebis[N'-(3-hydroxymethyl-2,5-dioxo-4-imidazolidinyl)-urea], and methylparaben.

Among these, chlorhexidine hydrochloride, hydrogen peroxide solution, cocoyl arginine ethyl ester·pyrrolidone carboxylate, zinc pyrithione, phenoxyethanol, sodium lauryldiaminoethylglycine, photosensitizers, benzoic acid, pantothenyl ethyl benzoate, iodopropynyl butylcarbamate, polyaminopropyl biguanide, resorcinol, chlorphenexin, ethanol, ethylhexyl glycerin, zinc oxide, plant-derived antibacterial compositions, and octanediol are preferable from the safety viewpoint.

The water-based liquid preferably contains less than or equal to 0.5 mass%, more preferably contains less than or equal to 0.1 mass%, and yet more preferably contains less than or equal to 0.01 mass% of the cosmetic preservative component. When greater than or equal to 0.5 mass% of the cosmetic preservative component is contained, a hygienic state can be maintained over a long term.

The water-based liquid may further contain a cosmetic active ingredient. The cosmetic active ingredient is not particularly limited and may include a moisturizing component and various beauty components. Examples of the moisturizing component include components that can provide moisture and a barrier function to stratum corneum of the skin. A component that assists the function of sebum excreted from the skin is also included.

The moisturizing component is preferably selected from the components listed in the list of the Japanese Labeling Name of Cosmetic Ingredients based on Pharmaceutical Affairs Act of Japan, components that comply with the EU directive of cosmetic products (Cosmetics Directive 76/768/EEC), components described in International Cosmetic Ingredient Dictionary and Handbook (January 1, 2002, 9th edition) by Cosmetic, Toiletry & Fragrance Association, U.S. (CTFA), and the like. Examples thereof include fatty acids (for example, stearic acid, linoleic acid, oleic acid, and lauric acid), fatty alcohols, cholesterol, squalene, palm oil, coconut palm oil (coconut oil), urea, lactic acid, glycerin, propylene glycol, hyaluronic acid, alpha hydroxy acid (AHA), honey, mineral oil, petroleum raw materials, petrolatum, beeswax, silicone, zinc oxide, lecithin, and vegetable oils (for example, olive oil, sunflower oil, grape seed oil, palm oil, safflower seed oil, argan oil, soybean oil, peanut oil, sesame oil, avocado oil, borage oil, jojoba oil, oat oil, pomegranate seed oil, almond oil, bitter apricot oil, rose hip oil, German chamomile, and shea butter), and these can be used alone or in combination.

Among these, fatty acids (stearic acid, linoleic acid, oleic acid, and lauric acid), fatty alcohols, cholesterol, squalene, palm oil, and coconut palm oil (coconut oil) are more preferable from the viewpoint of biological safety. Examples of the fatty alcohols include glycerin, which is a trihydric alcohol, diethylene glycol, propylene glycol, 1,3-propanediol, butylene glycol, and hexanediol, which are dihydric alcohols, and propanol, isopropanol, and butyl alcohol, which are monohydric alcohols.

Examples of the beauty component include vitamin C, vitamin E, arbutin, retinol, hyaluronic acid, collagen, adlay extract, seaweed extract, tranexamic acid, and elastin.

The water-based liquid preferably contains less than or equal to 99 mass% and more preferably 1 to 50 mass% of the cosmetic active ingredient. When greater than or equal to 1 mass% of the cosmetic active ingredient is contained, the effect of the cosmetic active ingredient is easily exhibited.

Furthermore, the water-based liquid may further contain components other than the aforementioned water-based solvents, cosmetic preservative components, and cosmetic active ingredients. Examples of the other component include a surfactant. Examples of the surfactant include anionic surfactants, cationic surfactants, amphoteric surfactants, and nonionic surfactants, and the surfactant is preferably selected from the components listed in the list of the Japanese Labeling Name of Cosmetic Ingredients based on Pharmaceutical Affairs Act of Japan, components that comply with the EU directive of cosmetic products (Cosmetics Directive 76/768/EEC), components described in International Cosmetic Ingredient Dictionary and Handbook (January 1, 2002, 9th edition) by Cosmetic, Toiletry & Fragrance Association, U.S. (CTFA), and the like.

The amount of other components is not particularly limited as long as the purpose and effects of the present disclosure are not impaired, but the amount of the other components in the water-based liquid is preferably less than or equal to 50 mass% and more preferably less than or equal to 10 mass%.

When the water-based liquid contains a moisturizing agent and a beauty component, the viscosity of the water-based liquid measured with a cone and plate viscometer at a shear rate of 2000 s⁻¹ is preferably greater than or equal to 1.1 mPa·s, more preferably greater than or equal to 1.2 mPa·s, and yet more preferably 1.3 to 1500 mPa·s. When the viscosity of the water-based liquid is within the aforementioned range, the adhesion between the thin film sheet and the adherend surface tends to be improved when the thin film sheet is attached to the adherend surface (skin) via the water-based liquid.

The method for preparing the water-based liquid is not particularly limited and may be similar to any known method for preparing lotions and emulsions.

### (5) Casing

In this embodiment, the porous substrate, the multilayer sheet, the hydrophilic substrate, and the water-based liquid described above are housed in the casing. Fig. 4 illustrates one example of a casing 20 of this embodiment. However, the casing 20 is not limited to the illustrated structure. The casing 20 of this embodiment has a porous substrate housing unit 21 for housing the porous substrate 11 (and the water-based liquid and the hydrophilic substrate), a multilayer sheet housing unit 22 for housing the multilayer sheet 12, a water-impermeable partition wall 23 that separates the porous substrate housing unit 21 and the multilayer sheet housing unit 22 from each other, and a hydrophilic substrate housing unit 26 for housing the hydrophilic substrate (not illustrated).

The porous substrate housing unit 21 may have a recess that can fix the porous substrate 11 therein. Here, a piezoelectric element (not illustrated) or the like may be disposed on the bottom of the porous substrate housing unit 21. For example, as illustrated in Fig. 3B, when the porous substrate 11 is pressed with the hydrophilic substrate 13 or the multilayer sheet 12, the piezoelectric element is vibrated so that the water-based liquid can thoroughly spread across the surface of the multilayer sheet 12 or the hydrophilic substrate 12.

A piston, a lever, or the like (not illustrated) may be disposed on the bottom of the porous substrate housing unit 21 in order to adjust the deformation amount (depression amount) of the porous substrate 11 when the porous substrate 11 is pressed with the hydrophilic substrate 13 or the multilayer sheet 12. By adjusting the deformation amount (depression amount) of the porous substrate 11, the amount of the water-based liquid supplied from the porous substrate 11 side can be adjusted to be within the desired range.

Meanwhile, the multilayer sheet housing unit 22 may be any structure that can house the desired amount of the multilayer sheet 12. Fig. 4 illustrates a state in which a roll-shaped multilayer sheet 12 is housed; alternatively, a desired number of sheet-shaped multilayer sheets 12 may be housed. A forwarding mechanism (not illustrated) for forwarding the multilayer sheet 12 toward the porous substrate 11 may be disposed in the multilayer sheet housing unit 22. The forwarding mechanism has a transport unit for moving the multilayer sheet 12 in a desired direction, a cutting unit for cutting the multilayer sheet 12 into a desired length in the case where the multilayer sheet 12 is roll-shaped, and a controller unit that controls the transport unit and the cutting unit. In this embodiment, the multilayer sheet 12 cut to a desired length (when the multilayer sheet 12 is a sheet, one multilayer sheet 12) is forwarded from an opening 24 in the partition wall 23 toward the porous substrate 11 by the forwarding mechanism. The cutting unit may be a cutter or the like that can be moved in a direction perpendicular to the multilayer sheet 12 forwarding direction, for example. Note that this cutter preferably has a very thin blade in order to prevent penetration of the thin film sheet into the support. The cutting unit may be disposed near the opening 24 of the partition wall 23.

However, the forwarding mechanism is not essential, and, if necessary, the user may take out a desired length of a multilayer sheet (when the multilayer sheet is a sheet-shaped, one sheet) from the multilayer sheet housing unit 22.

The multilayer sheet 12 is preferably stored in a dry state as described above. Thus, the multilayer sheet housing unit 22 preferably has a waterproof structure that prevents penetration of water from outside. In addition, the multilayer sheet housing unit 22 preferably has a structure for housing a desiccant or the like, and preferably includes a desiccant inside.

The partition wall 23 may be any structure that separates the porous substrate housing unit 21 and the multilayer sheet housing unit 22 from each other and that is formed of a water-impermeable material. In this embodiment, the opening 24 through which the multilayer sheet is discharged from the multilayer sheet housing unit 22 side to the porous substrate housing unit 21 side is provided.

The opening 24 in the partition wall 23 preferably opens only when the multilayer sheet 12 is taken out, and preferably usually stays closed to prevent the porous substrate housing unit 21 and the multilayer sheet 12 housing unit from communicating with each other.

Furthermore, a mirror 25 is disposed on the porous substrate housing unit 21 side of the partition wall 23. As a result, the user can attach the thin film sheet (not illustrated) to the adherend surface while looking through the mirror 25.

The hydrophilic substrate housing unit 26 may be any unit that can house the hydrophilic substrate. In this embodiment, the hydrophilic substrate housing unit 26 is disposed between the porous substrate housing unit 21 and the partition wall 23, and is separated from the porous substrate housing unit 21 by a removable and bendable water-impermeable film or the like. However, the position of the hydrophilic substrate housing unit 26 is not limited to this position, and the hydrophilic substrate housing unit 26 may be disposed, for example, between the multilayer sheet housing unit 22 and the partition wall 23 or on the bottom or top of the casing 20. Furthermore, the hydrophilic substrate housing unit 26 preferably also has a waterproof structure that prevents penetration of water from outside. In addition, the hydrophilic substrate housing unit 26 preferably has a structure for housing a desiccant or the like, and preferably includes a desiccant inside.

The casing 20 may further include a lock mechanism (not illustrated) or the like for closing between the partition wall 23 and the multilayer sheet housing unit 22 and between the partition wall 23 and the porous substrate housing unit 21.

The material constituting the casing may be any material that is not eroded by the water-based liquid, and examples thereof include resin materials such as polyethylene, polyethylene terephthalate, polypropylene, polyamide, polystyrene, vinyl chloride resins, AS resins, ABS resins, acrylic resins, and polycarbonate; natural material-originated materials such as sugar cane, reeds, kenaf, and diatomaceous earth; and metal materials such as aluminum, stainless steel, tin plates, and steels. The casing may be subjected to an antibacterial treatment or the like. In particular, the antibacterial activity inside the casing is easily maintained by using diatomaceous earth in some part of the casing.

### (6) Others

The cosmetic set may further include, in addition to the porous substrate, the multilayer sheet, the hydrophilic substrate, the water-based liquid, and the casing described above, an attachment jig or the like that assists attachment of the thin film sheet to the adherend surface.

The attachment jig is, for example, preferably a structure that supports the hydrophilic substrate described above and easily applies even load between the adherend surface and the hydrophilic substrate (thin film sheet). Moreover, the attachment jig may have a structure that facilitates release of end portions of the thin film sheet from the hydrophilic substrate through ultrasonic waves.

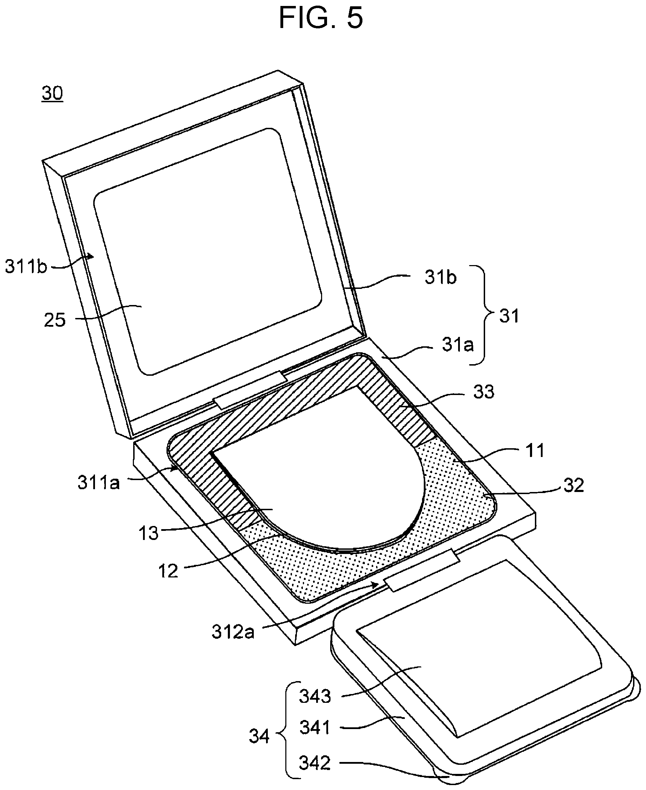

Another example of the casing described above is illustrated in Fig. 5. A casing 30 illustrated in Fig. 5 includes a casing body 31, a porous substrate housing unit 32 that is removably attached to the casing body 31 and is designed to house the porous substrate 11 (and the water-based liquid), a multilayer sheet housing unit 34 that is removably attached to the casing body 31 and is designed to house the multilayer sheet 12, a hydrophilic substrate housing unit (not illustrated) for housing the hydrophilic substrate 13, and a guide frame 33 for placing the hydrophilic substrate 13 and the multilayer sheet 12 at designated positions. Fig. 5 illustrates a state in which the hydrophilic substrate 13 taken out from the hydrophilic substrate housing unit (not illustrated) and the multilayer sheet 12 taken out from the multilayer sheet housing unit 34 are placed on the porous substrate 11. In order to make the shapes readily identifiable, the guide frame 33 and the porous substrate 11 are hatched in Fig. 5.

The casing body 31 has a base 31a to which the porous substrate housing unit 32 and the multilayer sheet housing unit 34 are mounted, and a cover 31b for covering the base 31a. In the embodiment illustrated in Fig. 5, the base 31a and the cover 31b are rotatably connected via a hinge, but do not have to be connected. Lock mechanisms (not illustrated) and the like may be installed to the base 31a and the cover 31b so that the base 31a and the cover 31b are closed and locked when the cosmetic set is stored or carried.

The base 31a of the casing body 31 has a recess 311a that corresponds to the outer shape of the porous substrate housing unit 32. A fixing unit (not illustrated) for fixing the porous substrate housing unit 32 may be disposed on the outer wall or the bottom surrounding the recess 311a. Alternatively, a thrusting structure, a notch, or the like (not illustrated) for facilitating removal of the porous substrate housing unit 32 may be disposed on the outer wall or the bottom surrounding the recess 311a.

The base 31a of the casing body 31 has a connecting unit 312a used to rotatably mount the multilayer sheet housing unit 34. The shape of the connecting unit 312a is not particularly limited, and one example is a hinge structure that has a tab. In such a case, the tab of the hinge structure is fitted into the recess or the like formed in the multilayer sheet housing unit 34 so that the multilayer sheet housing unit 34 can be fixed to the base 31a.

Meanwhile, the cover 31b of the casing body 31 is to have a recess 311b for housing the multilayer sheet housing unit 34 inside, and a mirror 25 is preferably placed on the surface of the cover 31b facing the base 31a. The cover 31b and the base 31a may be constituted by the same material or by different materials. The material for the casing body 31 (the base 31a and the cover 31b) is the same as the material for the casing 20 described above.

The porous substrate housing unit 32 may be any structure that can house the porous substrate 11 (and the water-based liquid), and is a dish-shaped structure surrounding the porous substrate 11 in Fig. 5. With this structure, the porous substrate housing unit 32 together with the porous substrate 11 can be replaced with a new unit, and this is advantageous from the viewpoints of antiseptic action and hygiene. Alternatively, an engaging unit or the like (not illustrated) for fixing the porous substrate housing unit 32 to the outer wall or the bottom of the recess 311a of the base 31a of the casing body 31 may be disposed on the outer peripheral surface or the bottom of the porous substrate housing unit 32. The material for the porous substrate housing unit 32 may be any material that is not eroded by the water-based liquid, and the material for the porous substrate housing unit 32 may be the same as or different from the material for the casing body 31.

Meanwhile, the guide frame 33 is a frame for aligning the hydrophilic substrate 13 and the multilayer sheet 12, and is a sheet-shaped member having a cutout corresponding to the shape of the hydrophilic substrate 13 or the like. The shape of the guide frame 33 is not particularly limited, and, in Fig. 5, the guide frame 33 is formed to extend half around the hydrophilic substrate 13 and the multilayer sheet 12. Alternatively, the guide frame 33 may be formed to surround the entire perimeters of the hydrophilic substrate 13 and the multilayer sheet 12, or may be formed to extend along only one side or two sides of the hydrophilic substrate 13 and the multilayer sheet 12.

Here, the thickness of the guide frame 33 is preferably smaller than the thickness of the hydrophilic substrate 13. When the thickness of the guide frame 33 is smaller than that of the hydrophilic substrate 13, and, when the hydrophilic substrate 13 is pressed toward the porous substrate 11 by using a pressing portion 343 of the multilayer sheet housing unit 34 as described below, these elements can make sufficient contact with one another.

The material for the guide frame 33 may be any material that is not eroded by the water-based liquid and that does not easily deform when the hydrophilic substrate 13 and the multilayer sheet 12 are placed on the porous substrate 11. The material for the guide frame 33 may be the same as or different from the material for the casing body 31. Alternatively, the guide frame 33 may be fixed to the base 31a of the casing body 31, or may be fixed to the porous substrate housing unit 32. When the guide frame 33 is mounted to the porous substrate housing unit 32, the guide frame 33 can be replaced together with the porous substrate housing unit 32.

Meanwhile, the multilayer sheet housing unit 34 has a connecting unit (not illustrated) for connection to the base 31a of the casing body 31, a sheet housing unit body 341 that houses the multilayer sheet, a sheet housing unit cover 342 that covers the sheet housing unit body 341, and the pressing portion 343. When the cosmetic set is stored or carried, the multilayer sheet housing unit 34 is between the cover 31b of the casing body 31 and the porous substrate housing unit 32, in other words, inside the cover 31b. Moreover, although not illustrated in Fig. 5, with this casing body 30, a region between the sheet housing unit cover 342 of the multilayer sheet housing unit 34 and the cover 31b of the casing body 31 can be used as a hydrophilic substrate housing unit.

The connecting unit (not illustrated) of the multilayer sheet housing unit 34 is appropriately selected according to the structure of the connecting unit 312a of the casing body 31. As mentioned above, when the connecting unit 312a of the casing body 31 is a hinge structure having a tab, the connecting unit of the multilayer sheet housing unit 34 is preferably a recess or the like that corresponds to the tab.

The sheet housing unit body 341 of the multilayer sheet housing unit 34 is a box-shaped structure having an opening in the surface facing the cover 31b of the casing body 31, and is designed to house the multilayer sheet 12 inside. A structure for housing a desiccant may be disposed inside the sheet housing unit body 341. Meanwhile, the sheet housing unit cover 342 preferably has a hermetically sealable structure to prevent penetration of water inside the sheet housing unit body 341. The sheet housing unit cover 342 may have one end fixed or unfixed to the sheet housing unit body 341.

The materials for the sheet housing unit body 341 and the sheet housing unit cover 342 may be any material that is not eroded by the water-based liquid and inhibits permeation of the water-based liquid, and may be the same as or different from the material for the casing body 31.

The pressing portion 343 of the multilayer sheet housing unit 34 is a member used to press the multilayer sheet 12 against the porous substrate 11 from the hydrophilic substrate 13 side after the multilayer sheet 12 and the hydrophilic substrate 13 are placed on the porous substrate 11. In Fig. 5, the pressing portion 343 is a projecting structure placed on a surface of the multilayer sheet housing unit 34 facing the porous substrate 11. In the casing 30 illustrated in Fig. 5, the cross section of the pressing portion 343 taken along the rotating and moving direction of the multilayer sheet housing unit 34 is substantially half-moon shaped. However, the curvature radius at the surface of this cross section need not be constant, and, for example, as illustrated in Fig. 5, the pressing portion 343 may be designed so that the height is larger on the side remote from the connecting unit compared to the side of the multilayer sheet housing unit 34 closer to the connecting unit. When the pressing portion 343 has such a shape and when the multilayer sheet housing unit 34 is rotated and moved, the hydrophilic substrate 13 and the like can be pressed toward the porous substrate 11 gradually from the end with an even force, and wrinkling of the multilayer sheet 12 (in particular, the thin film sheet) is suppressed. In addition, from the viewpoint of evenly pressing the hydrophilic substrate 13 toward the porous substrate 11, the length and the width of the pressing portion 343 in plan are preferably larger than the length and the width of the hydrophilic substrate 13. However, the shape of the pressing portion 343 is not limited to the shape illustrated in Fig. 5.

The material for the pressing portion 343 may be any material that does not excessively deform when the hydrophilic substrate 13 is pressed, and may be formed of the same material as or a different material from the materials for the sheet housing unit body 341 and the sheet housing unit cover 342. From the viewpoints of antiseptic action and hygiene, the material is preferably not water-absorbent, and is preferably a plastic, a metal material, or the like, for example. The pressing portion 343 may be integrated with the sheet housing unit body 341 or may be bonded to the sheet housing unit body 341.

In the casing 30 illustrated in Fig. 5, when the multilayer sheet 12 and the hydrophilic substrate 13 are placed on the porous substrate 11, the multilayer sheet housing unit 34 and the porous substrate 11 are positioned not to interfere with each other. Then the multilayer sheet 12 and the hydrophilic substrate 13 are sequentially placed on the porous substrate 11 by using the guide frame 33. Subsequently, the multilayer sheet housing unit 34 is moved toward the porous substrate housing unit 32, and the hydrophilic substrate 13 is pressed toward the porous substrate 11 by using the pressing portion 343 of the multilayer sheet housing unit 34. In this casing 30, since the hydrophilic substrate 13 is pressed toward the porous substrate 11 side at a desired force by the pressing portion 343, the multilayer sheet 12 is readily impregnated with an appropriate amount of the water-based liquid.

However, the casing of the cosmetic set of the present disclosure is not limited to the structures illustrated in Figs. 4 and 5. For example, the casing may be configurated so that only the porous substrate 11 is removable from the porous substrate housing unit 21 or 32 in Fig. 4 or 5. Moreover, according to the casing illustrated in Fig. 5, the multilayer sheet housing unit 34 is removably attached to the casing body 31; alternatively, the multilayer sheet housing unit 34 does not have to be removable. Furthermore, the casing may have a storage space for a bottle containing the water-based liquid.

### EXAMPLES

In the description below, the present disclosure is described with reference to examples. The scope of the present disclosure is not interpreted to be limited to the examples.

### [Examples 1 to 3]

Porous substrates A to C having the Shore A hardness indicated in Table 1 were respectively prepared. Next, each of the porous substrates was impregnated with a water-based liquid (water: 99.9 mass%, preservative component (phenoxyethanol): 0.1 mass%). Meanwhile, a polylactate sheet (thin film sheet) having a thickness of 200 nm was attached to a support formed of filter paper larger than the polylactate sheet in plan so as to prepare a multilayer sheet.

The multilayer sheet was placed on each of the porous substrates so that the support faced the porous substrate, and a hydrophilic substrate (water contact angle: 10°) was further placed on the multilayer sheet. Next, the entirety of the hydrophilic substrate was pressed toward the porous substrate, and then the hydrophilic substrate (and the thin film sheet) was lifted to release the support from the thin film sheet.

### [Comparative Example]

A hydrophilic substrate and a multilayer sheet were prepared as in Examples. Then, the multilayer sheet was placed on the hydrophilic substrate so that the multilayer sheet faced the thin film sheet, and water was sprayed with a sprayer from the support side of the multilayer sheet. Subsequently, the support was lifted to release the support from the thin film sheet.

### [Evaluation]

The support releasability in the examples and the comparative example described above was evaluated by the following standard. The results are indicated in Table 1. Δ and O indicate the range that does not pose practical issues.
O: The support could easily be released from the thin film sheet, and no wrinkles were found in the thin film sheet after release.
Δ: The support could easily be released from the thin film sheet, but few wrinkles were found in part of the thin film sheet after release.
×: The support could not easily be released from the thin film sheet, and even if it could, wrinkles were found in the thin film sheet after release.

**[Table 1]**

| | Porous substrate | Shore A hardness of porous substrate | Evaluation |
|---|---|---|---|
| Comparative Example | - | - | × |
| Example 1 | A | 1.0 | O |
| Example 2 | B | 50 | O |
| Example 3 | C | 90 | Δ |

### [Results]

As apparent from Table 1, when a porous substrate was used, the support could easily be released from the thin film sheet, and wrinkles rarely formed in the thin film sheet (Examples 1 to 3). According to the methods of Examples 1 to 3, water dripping did not occur when the thin film sheet was attached to the adherend surface, and the thin film sheet could be attached to the adherend surface without wrinkling. Note that, in Example 3, presumably since the porous substrate was rigid, the amount of the water-based liquid was small compared to Examples 1 and 2, and some wrinkling occurred.

In contrast, when no porous substrate was used, it was difficult to release the thin film sheet from the support and the thin film sheet wrinkled in some cases (Comparative Example).

### [Examples 4 to 7]

Porous substrates D to G having the Shore A hardness indicated in Table 2 were respectively prepared. Next, each of the porous substrates was impregnated with a water-based liquid (water: 99.9 mass%, preservative component (phenoxyethanol): 0.1 mass%). Meanwhile, a polylactate sheet (thin film sheet) having a thickness of 200 nm was attached to a support formed of filter paper larger than the polylactate sheet in plan so as to prepare a multilayer sheet.

The multilayer sheet was placed on each of the porous substrates so that the support faced the porous substrate, and a hydrophilic substrate (water contact angle: 10°) was further placed on the multilayer sheet. Next, the entirety of the hydrophilic substrate was pressed toward the porous substrate, and then the hydrophilic substrate (and the thin film sheet) was lifted to release the support from the thin film sheet.

### [Evaluation]

The support releasability in the examples and the comparative example described above was evaluated by the following standard. The results are indicated in Table 2. Δ and O indicate the range that does not pose practical issues.
O: The support could easily be released from the thin film sheet, and no wrinkles were found in the thin film sheet after release.
Δ: The support could easily be released from the thin film sheet, but few wrinkles were found in part of the thin film sheet after release.
×: The support could not easily be released from the thin film sheet, and even if it could, wrinkles were found in the thin film sheet after release.

**[Table 2]**

| | Porous substrate | Shore A hardness of porous substrate | Evaluation |
|---|---|---|---|
| Example 4 | D (polyvinyl alcohol) | 50 | O |
| Example 5 | E (hydrophilic polyurethane) | 50 | O |
| Example 6 | F (hydrophobic polyurethane) | 50 | Δ |
| Example 7 | G (synthetic rubber (styrenebutadiene)) | 50 | Δ |

### [Results]

As apparent from Table 2, when a porous substrate was used, the support could easily be released from the thin film sheet, and wrinkles rarely formed in the thin film sheet (Examples 4 to 7). According to these methods, water dripping did not occur when the thin film sheet was attached to the adherend surface, and the thin film sheet could be attached to the adherend surface without wrinkling. In particular, when a porous substrate formed of polyvinyl alcohol and hydrophilic polyurethane was used, better results were obtained than in examples that used porous substrates formed of different materials (Examples 4 and 5).

### Industrial Applicability

According to the cosmetic set of the present disclosure, the support can be easily released from the thin film sheet by simple operation, and the thin film sheet can be attached to an adherend surface without wrinkling. Thus, the cosmetic set is extremely useful for attaching various types of beauty sheets and medical sheets.

### Reference Signs List

11 porous substrate
12, 120 multilayer sheet
12a, 120a support
12b, 120b thin film sheet
13 hydrophilic substrate
20, 30 casing
21, 32 porous substrate housing unit
22, 34 multilayer sheet housing unit
23 partition wall
24 opening
25 mirror
26 hydrophilic substrate housing unit
31 casing body
33 guide frame
100 cosmetic set
130 jig
311a, 311b recess
312a connecting unit
341 sheet housing unit body
342 sheet housing unit cover
343 pressing portion

## Claims

1. A cosmetic set comprising:
a multilayer sheet that includes a support and a thin film sheet disposed on the support;
a hydrophilic substrate;
a water-based liquid; and
a porous substrate that can retain the water-based liquid inside,
wherein:
under a state in which the porous substrate is impregnated with the water-based liquid, the multilayer sheet is placed so that the support faces the porous substrate,
the hydrophilic substrate is further placed on the multilayer sheet, and
the porous substrate, the multilayer sheet, and the hydrophilic substrate are pressed so as to impregnate the multilayer sheet with the water-based liquid and release the thin film sheet and the support.

2. The cosmetic set according to Claim 1, wherein:
the thin film sheet has a thickness less than or equal to 10 µm.

3. The cosmetic set according to Claim 1 or 2, wherein:
the porous substrate has a Shore A hardness less than or equal to 90.

4. The cosmetic set according to any one of Claims 1 to 3, wherein:
the porous substrate is impregnated with the water-based liquid.

5. The cosmetic set according to any one of Claims 1 to 3, wherein:
the water-based liquid is contained in a container.

6. The cosmetic set according to any one of Claims 1 to 5, further comprising a casing,
wherein the porous substrate is housed in a porous substrate housing unit of the casing.

7. The cosmetic set according to Claim 6, wherein:
the multilayer sheet is housed in a multilayer sheet housing unit of the casing, and
the porous substrate housing unit and the multilayer sheet housing unit of the casing are separated from each other by a water-impermeable partition wall.

8. The cosmetic set according to any one of Claims 1 to 7, wherein:
the water-based liquid contains a cosmetic preservative component.
